# EUROPEAN PATENT APPLICATION

(11) **EP 2 642 382 A1**
(43) Date of publication of application: **25.09.2013**
(21) Application number: 13153355.6
(22) Date of filing: 30.01.2013
(51) Int. Cl.: G06F 3/16, G10L 15/26, G06F 9/44

(54) **Method of enabling voice input for a visually based interface**

(30) Priority: 19.03.2012 US 201261612591 P; 29.01.2013 US 201313753263
(71) Applicant: BlackBerry Limited, Waterloo ON N2L 3W8 (CA)
(72) Inventor: Fields, Gregory Jason, Waterloo, Ontario N2L 3W8 (CA); Niranjan, Karthigesu, Kanata, Ontario K2K 3K1 (CA)
(74) Representative: Patel, Binesh

(57) **Abstract**

A method of enabling voice input for a graphical user interface (GUI) based application (274) on an electronic device (201). The method includes: obtaining required properties of one or more user interface objects of the GUI-based application (274), wherein the one or more user interface objects include one or more input objects; receiving a voice input; extracting from the voice input one or more elements; associating the one or more elements with the one or more input objects; identifying, based on said associating, an input object having a required property which is not satisfied; and outputting, based on the required property, audio output for a prompt for a further voice input.

## Description

### CROSS-REFERENCE TO RELATED APPLICATIONS

This application claims the benefit of priority to U.S. provisional application no. 61/612,591 filed March 19, 2012, and U.S. Application No. 13/753,263 filed January 29, 2013, the contents of which are hereby incorporated by reference.

### TECHNICAL FIELD

Example embodiments relate to the field of voice-based communications with electronic devices.

### BACKGROUND

The availability of speech recognition and voice-based tasks have allowed users to complete some tasks using voice commands, such as checking the weather or placing a call on an electronic device. These tasks may involve interacting with visually-based applications that are designed to be displayed on a device. However, for more complex voice-based tasks, a user may not be aware of what information is expected to complete a task. Some existing conventional solutions may be limited to performing specific voice-based tasks only by using pre-coded voice applications and commands.

Additional difficulties with some existing systems may be appreciated in view of the detailed description below.

### BRIEF DESCRIPTION OF THE DRAWINGS

Embodiments will now be described, by way of example only, with reference to the attached Figures, wherein:

Figure 1 illustrates a block diagram of a communications system to which embodiments may be applied;

Figure 2 illustrates a block diagram showing an example of a mobile device that can be used in the communications system of Figure 1;

Figure 3 shows, in flowchart form, an example method for enabling voice input for input objects; and

Figure 4 shows, in a sequence diagram, an example use scenario for enabling voice input for input objects.

Like reference numerals are used throughout the Figures to denote similar elements and features.

### DETAILED DESCRIPTION OF EXAMPLE EMBODIMENTS

In some example embodiments there is provided a method which enables the completion of a complex task on an electronic device using audio inputs and outputs. A complex voice-based task may be, for example, completing a restaurant reservation or organizing a meeting request, having more than one input object. As well, a complex voice-based task may involve, in some embodiments, completing a form on a display screen of the electronic device. Some example embodiments include a method which permits a user to interact with various applications based on a graphical user interface (GUI), and/or web-based applications, and/or any other foreground running applications, using voice command inputs and audio responses. For example, such applications may otherwise not be voice-enabled. In this way, the user may not be required to look at the display screen. The applications may be designed to be visually displayed on a device, however the present method does not require that the applications be displayed.

In accordance with an example embodiment, there is provided a method of enabling voice input for a GUI-based application on an electronic device. The method includes: obtaining required properties of one or more user interface objects of the GUI-based application, wherein the one or more user interface objects include one or more input objects; receiving a voice input; extracting from the voice input one or more elements; associating the one or more elements with the one or more input objects; identifying, based on said associating, an input object having a required property which is not satisfied; and outputting, based on the required property, audio output for a prompt for a further voice input.

In accordance with an example embodiment, there is provided an electronic device including a processor, a memory coupled to the processor, an audio input interface; and an audio output interface. The memory includes instructions, which when executed by the processor, cause the processor to: obtain required properties of one or more user interface objects of a GUI-based application, wherein the one or more user interface objects include one or more input objects; receive a voice input through the audio input interface, extract from the voice input one or more elements, associate the one or more elements with the one or more input objects, identify, based on said associating, an input object having a required property which is not satisfied, and output, through the audio output interface, audio output for a prompt for a further voice input, based on the required property.

In accordance with an example embodiment, there is provided a non-transitory computer readable medium having instructions stored thereon for enabling voice input for a graphical user interface (GUI)-based application on an electronic device, that when executed by a processor causes the electronic device to: obtain required properties of one or more user interface objects of the GUI-based application, wherein the one or more user interface objects include one or more input objects; receive a voice input; extract from the voice input one or more elements; associate the one or more elements with the one or more input objects; identify, based on said associating, an input object having a required property which is not satisfied; and output, based on the required property, audio output for a prompt for a further voice input.

Reference to voice-enabled applications herein includes applications which are configured to receive or process voice inputs from the user and perform or execute an appropriate response.

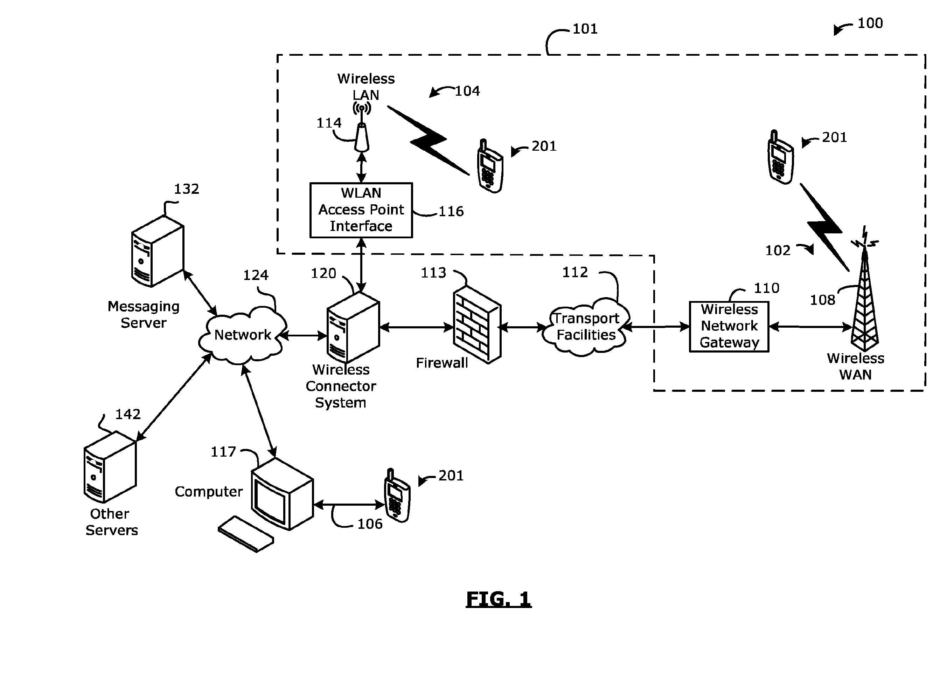

Reference is first made to Figure 1 which shows in block diagram form a communication system 100 in which example embodiments of the present disclosure can be applied. The communication system 100 comprises a number of mobile communication devices (mobile devices) 201 which may be connected to the remainder of system 100 in any of several different ways. Accordingly, several instances of mobile communication devices 201 are depicted in Figure 1 employing different example ways of connecting to system 100. Mobile communication devices 201 are connected to a wireless communication network 101 which may comprise one or more of a Wireless Wide Area Network (WWAN) 102 and a Wireless Local Area Network (WLAN) 104 or other suitable network arrangements. In some embodiments, the mobile communication devices 201 are configured to communicate over both the WWAN 102 and WLAN 104, and to roam between these networks. In some embodiments, the wireless network 101 may comprise multiple WWANs 102 and WLANs 104.

The WWAN 102 may be implemented as any suitable wireless access network technology. By way of example, but not limitation, the WWAN 102 may be implemented as a wireless network that includes a number of transceiver base stations 108 (one of which is shown in Figure 1) where each of the base stations 108 provides wireless Radio Frequency (RF) coverage to a corresponding area or cell. The WWAN 102 is typically operated by a mobile network service provider that provides subscription packages to users of the mobile communication devices 201. In some embodiments, the WWAN 102 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSDPA (High-Speed Downlink Packet Access), IEEE 802.16e (also referred to as Worldwide Interoperability for Microwave Access or "WiMAX), or various other networks. Although WWAN 102 is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN 102 may further comprise a wireless network gateway 110 which connects the mobile communication devices 201 to transport facilities 112, and through the transport facilities 112 to a wireless connector system 120. Transport facilities may include one or more private networks or lines, the public internet, a virtual private network, or any other suitable network. The wireless connector system 120 may be operated, for example, by an organization or enterprise such as a corporation, university, or governmental department, which allows access to a network 124 such as an internal or enterprise network and its resources, or the wireless connector system 120 may be operated by a mobile network provider. In some embodiments, the network 124 may be realised using the internet rather than an internal or enterprise network.

The wireless network gateway 110 provides an interface between the wireless connector system 120 and the WWAN 102, which facilitates communication between the mobile communication devices 201 and other devices (not shown) connected, directly or indirectly, to the WWAN 102. Accordingly, communications sent via the mobile communication devices 201 are transported via the WWAN 102 and the wireless network gateway 110 through transport facilities 112 to the wireless connector system 120. Communications sent from the wireless connector system 120 are received by the wireless network gateway 110 and transported via the WWAN 102 to the mobile communication devices 201.

The WLAN 104 comprises a wireless network which, in some embodiments, conforms to IEEE 802.11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in Figure 1) that collectively provide a WLAN coverage area.

The WLAN 104 may be a personal network of the user, an enterprise network, or a hotspot offered by an internet service provider (ISP), a mobile network provider, or a property owner in a public or semi-public area, for example. The access points 114 are connected to an access point (AP) interface 116 which may connect to the wireless connector system 120 directly (for example, if the access point 114 is part of an enterprise WLAN 104 in which the wireless connector system 120 resides), or indirectly via the transport facilities 112 if the access point 114 is a personal Wi-Fi network or Wi-Fi hotspot (in which case a mechanism for securely connecting to the wireless connector system 120, such as a virtual private network (VPN), may be required). The AP interface 116 provides translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email messages, to and from a set of managed mobile communication devices 201. The wireless connector system 120 also provides administrative control and management capabilities over users and mobile communication devices 201 which may connect to the wireless connector system 120.

The wireless connector system 120 allows the mobile communication devices 201 to access the network 124 and connected resources and services such as a messaging server 132 (for example, a Microsoft Exchange™, IBM Lotus Domino™, or Novell GroupWise™ email messaging server) and optionally other servers 142. The other servers 142 may comprise a content server for providing content such as internet content or content from an organization's internal servers to the mobile communication devices 201 in the wireless network 101, an application server for implementing server-based applications such as instant messaging (IM) applications, or a web server for providing content accessible by a web browser.

For the purposes of the described example embodiments, any server within an enterprise network, such as a messaging server or any other server, will be referred to as an enterprise server. A service may include one or more servers or enterprise servers.

The wireless connector system 120 typically provides a secure exchange of data (e.g., email messages, personal information manager (PIM) data, and IM data) with the mobile communication devices 201. In some embodiments, communications between the wireless connector system 120 and the mobile communication devices 201 are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data.

Encryption keys used for communications or for encrypting data stored on the device can be protected via various means such as a password or hardware-based protections, such as those afforded by hardware-based key stored mechanisms.

The wireless network gateway 110 is adapted to send data packets received from the mobile device 201 over the WWAN 102 to the wireless connector system 120. The wireless connector system 120 then sends the data packets to the appropriate connection point such as the messaging server 132, or other servers 142. Conversely, the wireless connector system 120 sends data packets received, for example, from the messaging server 132, or other servers 142 to the wireless network gateway 110 which then transmit the data packets to the destination mobile device 201. The AP interfaces 116 of the WLAN 104 provide similar sending functions between the mobile device 201, the wireless connector system 120 and network connection point such as the messaging server 132, or other servers 142.

The network 124 may comprise a private local area network, metropolitan area network, wide area network, the public internet or combinations thereof and may include virtual networks constructed using any of these, alone, or in combination.

A mobile device 201 may alternatively connect to the wireless connector system 120 using a computer 117, such as desktop or notebook computer, via the network 124. A link 106 may be provided for exchanging information between the mobile device 201 and computer 117 connected to the wireless connector system 120. The link 106 may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the mobile device 201 and computer 117. The short-range wireless communication interface may be a personal area network (PAN) interface. A personal area network is a wireless point-to-point connection meaning no physical cables are required to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the Bluetooth™ special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices 201. The teachings of the present disclosure may be employed in connection with any other type of network and associated devices that are effective in implementing or facilitating wireless communication. Suitable variations of the communication system will be understood to a person of skill in the art and are intended to fall within the scope of the example embodiments.

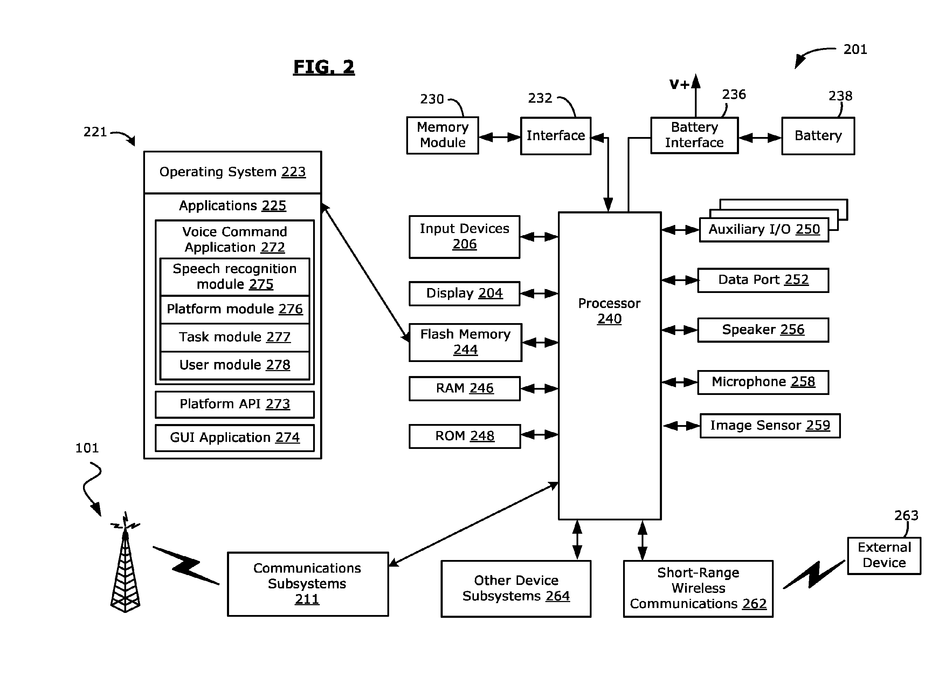

Reference is first made to Figure 2 which shows in block diagram form a mobile device 201 in which example embodiments can be applied. The mobile device 201 is a two-way communication device having data and voice communication capabilities, and the capability to communicate with other computer systems, for example, via the Internet. Depending on the functionality provided by the mobile device 201, in various embodiments the electronic device 201 may be a smartphone, a mobile telephone or a PDA (personal digital assistant) or tablet enabled for wireless communication, or a computer system with a wireless modem, such as a computer system within a vehicle.

The mobile device 201 includes a case (not shown) housing the components of the device 201. The internal components of the mobile device 201 are constructed on a printed circuit board (PCB). The mobile device 201 includes a controller comprising at least one processor 240 (such as a microprocessor) which controls the overall operation of the device 201. The processor 240 interacts with device subsystems such as a wireless communication subsystem 211 for exchanging radio frequency signals with the wireless network 101 to perform communication functions. The processor 240 interacts with additional device subsystems including a display screen 204 such as a liquid crystal display (LCD) screen, input devices 206 such as a keyboard and control buttons, flash memory 244, random access memory (RAM) 246, read only memory (ROM) 248, auxiliary input/output (I/O) subsystems 250, data port 252 such as serial data port, such as a Universal Serial Bus (USB) data port speaker 256, microphone 258.

The mobile device 201 may comprise a touchscreen display in some embodiments. The touchscreen display may be constructed using a touch-sensitive input surface connected to an electronic controller and which overlays the display screen 204. The touch-sensitive overlay and the electronic controller provide a touch-sensitive input device and the processor 240 interacts with the touch-sensitive overlay via the electronic controller.

The mobile device 201 may communicate with any one of a plurality of fixed transceiver base stations 108 (Fig. 1) of the wireless network 101 within its geographic coverage area. The mobile device 201 may send and receive communication signals over the wireless network 101 after the required network registration or activation procedures have been completed.

The processor 240 operates under stored program control and executes software modules 221 stored in memory such as persistent memory, for example, in the flash memory 244. As illustrated in Figure 2, the software modules 221 comprise operating system software 223 and software applications 225, which for example, may include a platform API 273, a GUI-based application 274 and a voice command application 272. The voice command application 272 may include speech recognition module 275, a platform module 276, a task module 277, and a user module 278. The software applications 225 may further include a text or instant messaging application, a web browser, a file manager application, and an email messaging application (not shown). In some example embodiments, the functions performed by each of the applications may each be realized as a plurality of independent elements, and any one or more of these elements may be implemented as parts of other software applications 225. In some example embodiments, one or more applications 225 are configured to receive data, such as files, documents or other information, from a server, such as a messaging server 132 (Fig. 1), or a web or other server 142 (Fig. 1). Non-limiting examples of data received from a server may include email attachments, files transferred via file transfer protocol (FTP) or any other protocol, documents or files downloaded from a web page via a web browser, or files sent via a text or instant messaging application.

In some examples, the software applications 225 may be implemented using a number of services which define the communication protocols used to communicate between an external server 142 and an application on the communication device. Some applications may only connect to a single type of server using the same communication protocol settings and will therefore only operate using a single service, while other applications may connect to a variety of servers using different communication protocols and will require multiple services. For example, a banking application on a communication device may only require a single service defining the communication protocol for securely communicating with the bank's online banking server, while a web browser may require many different services such as services for general web page browsing, for secure web page browsing, for streaming video, for accessing corporate web email, or for accessing online public email services.

The software modules 221 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

In some embodiments, the auxiliary input/output (I/O) subsystems 250 may comprise an external communication link or interface, for example, an Ethernet connection. The mobile device 201 may comprise other wireless communication interfaces for communicating with other types of wireless networks, for example, a wireless network such as an orthogonal frequency division multiplexed (OFDM) network or a GPS (Global Positioning System) subsystem comprising a GPS transceiver for communicating with a GPS satellite network (not shown). The auxiliary I/O subsystems 250 may comprise a pointing or navigational tool (input device) such as a clickable trackball or scroll wheel or thumbwheel, or a vibrator for providing vibratory notifications in response to various events on the device 201 such as receipt of an electronic message or incoming phone call, or for other purposes such as haptic feedback (touch feedback).

In some embodiments, the mobile device 201 includes a removable memory card 230 (typically comprising flash memory) and a memory card interface 232. The mobile device 201 can store data on the removable memory card 230, in an erasable persistent memory, which in one example embodiment is the flash memory 244, or on both a removable memory card and in an erasable persistent memory.

In some embodiments, the mobile device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their mobile device 201 to the host computer system via a USB cable or Bluetooth® connection, traffic that was destined for the wireless network 101 is automatically routed to the mobile device 201 using the USB cable or Bluetooth® connection. Similarly, any traffic destined for the wireless network 101 is automatically sent over the USB cable Bluetooth® connection to the host computer system for processing.

The mobile device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile device 201, and the battery interface 236 provides a mechanical and electrical connection for the battery 238. The battery interface 236 is coupled to a regulator (not shown) which provides power V+ to the circuitry of the mobile device 201.

The short-range communication subsystem 262 is an additional optional component which provides for communication between the mobile device 201 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices. In another example, the subsystem 262 may communicate with an external device 263 having a microphone and a speaker (not shown), to aid in the hands-free operation of the mobile device 201.

The mobile device 201 also may include image sensor 259 configured to generate digital image data. The image sensor 259 may include a conventional optical sensor for capturing digitized image data, or may be some other digital imaging device. The image sensor 259 operates by capturing visual data from the environment using photosensitive electronic elements and transmitting or storing this data as digital image data using other components of the mobile device 201. The image sensor 259 may be, for example, a camera or a charge-coupled device (CCD).

A predetermined set of applications that control basic device operations, including data and possibly voice communication applications will normally be installed on the mobile device 201 during or after manufacture. Additional applications and/or upgrades to the operating system 223 or software applications 225 may also be loaded onto the mobile device 201 through the wireless network 101, the auxiliary I/O subsystem 250, the serial port 252, the short-range communication subsystem 262, or other suitable subsystem 264. The downloaded programs or code modules may be permanently installed, for example, written into the program memory (i.e. the flash memory 244), or written into and executed from the RAM 246 for execution by the processor 240 at runtime. Such flexibility in application installation increases the functionality of the mobile device 201 and may provide enhanced on-device functions, communication-related functions, or both. For example, secure communication applications may enable electronic commerce functions and other such financial transactions to be performed using the mobile device 201.

The mobile device 201 may provide two principal modes of communication: a data communication mode and an optional voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by the email messaging application and output to the display 204. A user of the mobile device 201 may also compose data items, such as email messages, for example, using the input devices in conjunction with the display screen 204. These composed items may be transmitted through the communication subsystem 211 over the wireless network 101.

In the voice communication mode, the mobile device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., the voice communication module) and hardware (i.e., the microphone 258, the speaker 256 and input devices). Alternative voice or audio I/O subsystems, such as a voice message recording subsystem, may also be implemented on the mobile device 201. Although voice or audio signal output is typically accomplished primarily through the speaker 256, the display screen 204 may also be used to provide an indication of the identity of a calling party, duration of a voice call, or other voice call related information. Similarly, audio signal input and output may be accomplished through an audio input interface and an audio output interface. The audio input interface may be the microphone 258, but may also be the short-range communication subsystem 262 which may receive an audio input from the external device 263. Similarly, the audio output interface may be the speaker 256, but may also be the short-range communication subsystem 262 which may communicate an audio output to the external device 263.

A difficulty of some conventional systems is that some tasks having voice commands are limited to those tasks that are hard-coded and known to the voice application on an electronic device. As the voice application relies on hard-coded information about the task, the voice application may not obtain additional information regarding the task from, for example, a non-voice enabled application. Therefore, such hard-coded voice applications cannot be used to complete tasks that are unknown, such as tasks for a new application downloaded to the electronic device, or native applications which are otherwise not voice-enabled.

In some example embodiments there is provided a method which enables the completion of a complex task on an electronic device using audio inputs and outputs. A complex voice-based task may be, for example, completing a restaurant reservation or organizing a meeting request. As well, a complex voice-based task may involve completing a web-based form on a display screen of the electronic device. Some example embodiments include a method which permits a user to interact with various applications and/or web-based forms using voice command inputs and audio responses. The applications or visually-based interfaces may be designed to be displayed visually, however it is not required that they be displayed in the present method. In this way, the user may not be required to look at the display screen. For example, the applications may be a new application downloaded to the electronic device, or native applications which are otherwise not voice-enabled.

In accordance with one example embodiment, there is provided a method of enabling voice input for a graphical user interface (GUI) based application on an electronic device. The method includes: obtaining required properties of one or more user interface objects of the GUI-based application wherein the one or more user interface objects include one or more input objects; receiving a voice input; extracting from the voice input one or more elements; associating the one or more elements with the one or more input objects; identifying, based on said associating, an input object having a required property which is not satisfied; and outputting, based on the required property, audio output for a prompt for a further voice input.

For example, referring again to Figure 2, the software applications 225 of the mobile device 201 comprise a platform API 273 of a platform class that is configured to permit applications, such as voice-enabled applications, to register with the platform API 273. As well, the platform API 273 is configured to receive events and pertinent information from GUI-based applications that, when executed, process or provide information to be visually rendered to a graphical interface rendered on the display screen 204. These may include applications that are native or resident on the mobile device 201, and also may include applications developed by third party developers or external applications. Third party applications may include applications downloaded to the mobile device 201 through an external network. The platform API 273 is further configured to permit communication between the registered voice-enabled applications, for example voice command application 272, and the GUI-based applications that render information visually.

The voice command application 272 configures the processor to implement a speech recognition module 275, a platform module 276, a task module 277 and a user module 278. The speech recognition module 275 is configured to receive audio data gathered by the microphone 258 and, where this audio data comprises a voice input, the module may translate the voice input into text corresponding to the content of the voice input. The speech recognition module 275 may perform this translation according to any of a number of conventional speech recognition algorithms. The platform module 276 is configured to initiate the registration of the voice command application 272 with the platform API 273, enabling the voice command application 272 to receive information from the platform class regarding GUI-based applications that render information visually, such as the GUI-based application. As well, the platform module 276 is configured to communicate with the platform API 273 to request additional information from the platform class regarding components of the GUI-based application 274. Also, the platform module 276 may be configured to build a logical control tree for the GUI-based application 274, as understood in the art. The task module 277 is configured to associate one or more elements of the voice input with one or more input objects. As well, the task module 277 is configured to determine whether required properties of the input objects are satisfied. For example, the task module 277 may determine whether the one or more elements correspond with the required input parameter for the one or more input objects. Finally, the task module 277 is configured to perform an action on the electronic device in respect to the determined content of the voice input. For example, the action may be populating input objects that are displayed on the display screen based on the voice input. In another embodiment, the action may be completing an event of the GUI-based application 274. The user module 278 is configured to produce a voice prompt to the user and to issue the voice prompt to the user via the speaker 256.

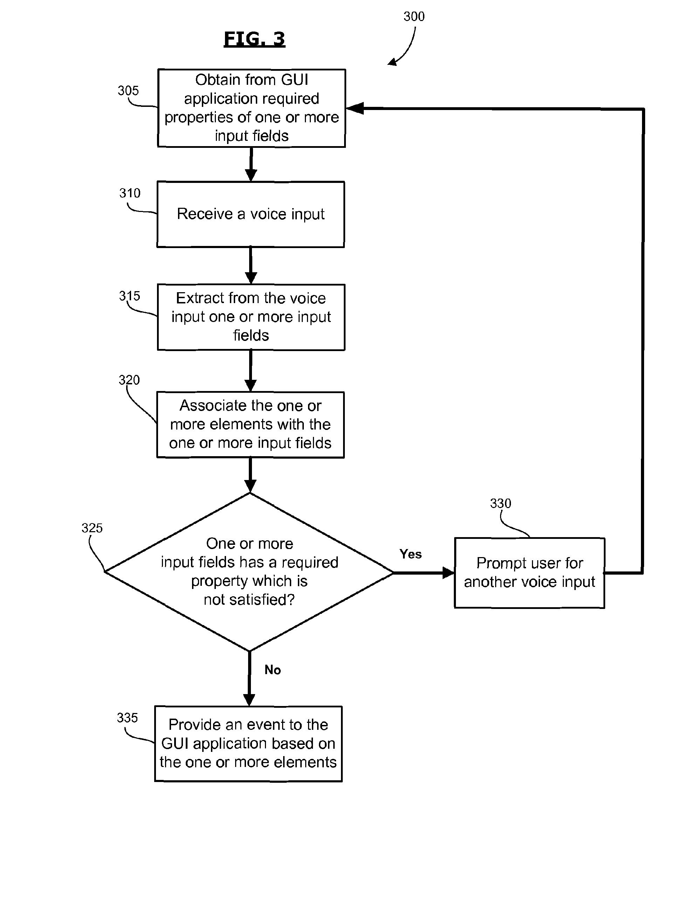

Reference is now made to Figure 3, which shows, in flowchart form, a method 300 of enabling voice input for a graphical user interface (GUI) based application executed on an electronic device. Input objects may include, for example, text-based inputs, pointer inputs, and touch inputs. A text-based input may be for example, an input field which receives alphanumeric text as the parameter. A pointer input requires the selection of the input value using a pointer, cursor, or focus of the display screen. Pointer inputs may include, for example, a slider scale, a checkbox, radio-button inputs, drop-down lists, etc. Input devices, to effect the pointer input, may include a touch screen, a mouse, a scrollwheel, a touchpad, etc. A touch input refers to a touch sensing surface's ability to recognize the presence of one, two, or more points of contact with the surface. Touch inputs may include, for example, touching, zooming, pinching, swiping, or performing equivalents of the pointer input, etc. The GUI-based application 274 listens for events, such as key presses, pointer movement, touch contact, alphanumeric values entered into an input field, etc.

The GUI-based application 274 that renders information visually may be a GUI-based application or a GUI-based component of an application. The data of a visually rendered application on the display screen comprises data relating to the visual presentation of the application (sometimes referred to as a "visual tree") as well as data relating to the logic of the application (sometimes referred to as a "logical tree"). In some example embodiments, the method 300 may generally utilize the logical data of the GUI-based application 274 to enable a voice input for input objects visually rendered on the display screen. The GUI-based application 274 contains user interface objects, which are the components that make up the user interface when rendered on the display screen 204. The user interface objects may include input objects, radio buttons, labels, images, etc. The method 300 may provide voice-enabling of the GUI-based application 274 which would otherwise not be voice-enabled. The method 300 does not require that the GUI-based application 274 be displayed on a display screen 204 of the mobile device 201. Accordingly, in some embodiments, the GUI-based application 274 is running on the mobile device 201, but the operating system of the mobile device 201 may turn off the display screen 204, such that the GUI-based application 274 is not visible on the display screen 204.

As understood in the art, the logical tree describes the relations between elements of the user interface. The logical tree may be responsible for inheritance of dependency property value(s), resolution of resource(s), and other functions. The visual tree contains all logical elements including all visual elements of the template of each element. The visual tree may be responsible for rendering, event routing, locating resources (if an element has no logical parent), and other functions.

Referring to Figure 3, the method 300 begins at step 305 with the electronic device obtaining information regarding required properties of one or more input objects visually rendered on the display screen from the GUI-based application 274.

Prior to step 305 or at step 305, the GUI-based application 274 programmatically exposes or provides pertinent information of the user interface objects. For example, as would be understood in the art, pertinent information such as role information, state information and/or context information, for each objective, container and screen may be exposed or provided to the platform API 273. Role may represent the functionally or behaviour of one or more objects. State may refer to a characteristic of the object, such as active, mandatory etc. Context may refer to the relationship and relevance between two or more objects. Pertinent information may be described as required properties of an object, container or screen. The platform API 273 may also update each user interface object in the GUI-based application 274 individually to obtain and automatically expose its pertinent information. In a scenario where the GUI-based application 274 has unique UI objects not found in a native library of components, the platform API 273 enables the GUI-based application 274 to expose its pertinent information. In this way, complex voice-based tasks of third party applications may be completed using the method 300. The GUI-based application 274 also sends events to the platform API 273 and the platform's API 273 registered "listeners". As well, the GUI-based application 274 listens for events from the platform API 273.

As well, prior to step 305 or at step 305, the platform module 276 of voice command application 272 is configured to register the voice command application 272 with the platform API 273. Consequently, the voice command application 272 is identified as a registered "listener" of the platform API 273, and this enables the voice command application 272 to receive from the platform API 273 events and pertinent information regarding the GUI-based application 274. Accordingly, when an event of the GUI-based application 274 occurs, the voice command application 272 receives salient information regarding the GUI-based application 274 via the platform API 273, such as the application title, identification of user interface objects on the screen, and other information.

Additionally, at step 305 the voice command application 272 uses the pertinent information received from the platform API 273 regarding the GUI-based application 274 to build a logical control tree for the GUI-based application 274 being rendered visually.

At step 310, the speech recognition module 275 of the voice command application 272 recognizes a voice input and receives a voice input via the microphone 258 of the electronic device. The activation of the voice command application 272 triggers the microphone 258 to be activated and monitoring for a voice input from a user. As well, the microphone 258 may be activated by other triggers to monitor for a voice input.

At step 315, the speech recognition module 275 of the voice command application 272 extracts from the voice input one or more elements. The speech recognition module 275 parses the voice input into one or more discrete elements that may define a voice command or a particular input for one of the user interface objects. The speech recognition module 275 may further translate the voice input received by the microphone 258 into text or another form intelligible to the electronic device, according to any of a number of conventional speech recognition algorithms as understood in the art.

At step 320, the task module 277 of the voice command application 272 associates the one or more elements with the one or more input objects of the GUI-based application 274 that are rendered visually on the display screen. The task module 277 determines the elements of the voice input that correspond with one or more of the user interface input objects of the GUI-based application 274 that is rendered on the display screen. As well, the task module 277 translates the one or more elements into input values for the one or more input objects. Associating may further involve temporary storage of the translated input values into input memory locations for the one or more input objects. At this point, the voice command application 272 may determine that additional information is required regarding the one or more of the user interface objects rendered on the display screen by the GUI-based application 274. The additional information may be required to properly associate the one or more elements of the voice input with the one or more input objects, to satisfy the required properties. Accordingly, the platform module 276 of the voice command application 272 may request additional information from the platform API 273 about each of the user interface objects on the screen, such as buttons, editable text objects, labels, etc. As well, the additional information requested from the platform API 273 may include the pertinent information for each user interface object or control, including for example, the role, state and contextual relevance between user interface objects, for each control displayed visually on the screen. In performing the association, the task module 277 takes into account required properties (i.e. role, state, context) of the input objects, such as input parameter, whether an input object is mandatory, or the contextual relevance between two objects of the GUI-based application 274. For example, where the one or more input objects include an input field configured for receiving a text-based input, the associating may include updating the input field by populating the input field with text based on the one or more elements. As well, where the one or more input objects include an input object configured for receiving a pointer input, the input objects may be updated by moving a slider on a slider scale; changing the state of a checkbox; changing the state of a radio button; and selecting a item from a drop-down list.

Based on the associating, at step 325 the task module 277 of the voice command application 272 determines whether the one or more input objects has a required property that is not satisfied given the received voice input. The task module 277 of the voice command application 272 reviews the information derived from the events received from the GUI-based application 274 via the platform API 273. As well, the task module 277 reviews information about the user interface controls received through the interrogatory requests to the platform API 273 for additional information. From the review of the received information regarding the GUI-based application 274 and its components, objects etc., the task module 277 may update or amend the logical control tree of the GUI-based application 274. As well, as a result of this review, the task module 277 may identify the one or more input objects which have required properties which are not satisfied after the association of the one or more elements of the voice input with the one or more input objects. For example, an input object with a required property that it is a mandatory object may not be satisfied if none of the one or more elements of the voice input provide a parameter for that input object. An input object may also have a contextual relevance required property, for example, if a city input object is completed, a country input object must also be completed in order to determine the permissible cities, as the two objects are contextually related to each other.

If the required properties of the one or more identified input objects are not satisfied, the method prompts the user for a further voice input (step 330). At step 330, the user module 278 of the voice command application 272 prompts the user for a further voice input to satisfy the required property of the identified input objects. The user module 278 is configured to produce a voice prompt, which may be a natural language prompt. The voice prompt is then outputted through the speaker 256 of the electronic device. The voice prompt may indicate to the user which input object is not satisfied in the GUI-based application 274 rendered on the display screen. As well, the voice prompt may indicate the type of input still needed to satisfy the input object. For example, in relation to a drop down menu with the options: A, B, and C, the voice prompt may indicate to the user that another voice input is required and name the options available for that input object (i.e. A, B or C). Also, the voice prompt may indicate the format of the input object requiring the further voice input. If two or more inputs are required for two or more identified input objects, the voice prompt may indicate the required information for the two or more identified input objects in the same voice prompt. This reduces the required iterations between the voice command application 272 and the user to complete the complex voice-based task.

The method returns to step 310 when the voice command application 272 receives a further voice input from the user. As previously discussed, the speech recognition module 275 of the voice command application 272 will receive the further voice input via the microphone 258 of the electronic device. As well, at step 315 the speech recognition module 275 may extract from the voice input one or more elements, and at step 320, the task module 277 may associate the one or more elements with the one or more identified objects.

If the voice input (or the further voice input) does satisfy the required properties of the one or more identified input objects, then at step 335 the task module 277 of the voice command application 272 completes the task to the GUI-based application 274 based on, for example, the further voice input, or based on a combination of the voice input and the further voice input. For example, the task module 277 takes the one or more elements of the voice input and the further voice input, and uses these elements to store the corresponding value into the input object, or to effect the corresponding value selection for the input object. Completion of a task may be, for example, completing a restaurant reservation request based on the received voice input and further voice input. In some example embodiments, where the input object is configured to receive a manipulation using a pointer input, such as a cursor, or a touch input, the step of completion involves performing the manipulation on the input element based on the voice input and the further voice input. The completion of the task does not require the GUI-based application 274 to be displayed on the display screen 204, and does not require the user interface objects to be displayed on the display screen 204. In some embodiments, the GUI-based application 274 may be visually displayed on the display screen 204, and the step of completion may further include the selective population of the input objects based on the earlier determined associations of the one or more elements of the voice input and the further voice input.

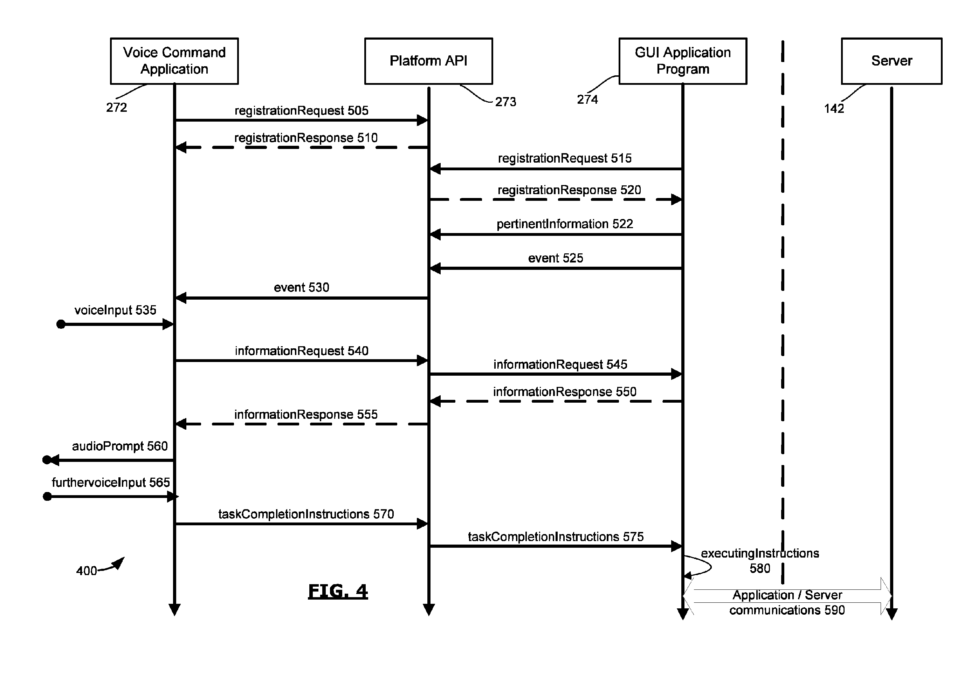

Reference is now made to Figure 4, which illustrates how the platform API 273, the voice command application 272, and the GUI-based application 274 interact with each other in an example conversation 400 of a use scenario. From Figure 4, in some example embodiments, the platform API 273, the voice command application 272, and the GUI-based application 274 are located on the mobile device 201, and the server 142 is located externally to the mobile device 201. The server 142 may communicates with the GUI-based application 274 and provides supporting functionality, requested data, updates, etc. For example, the GUI-based application 274 may include a web browser application for communication with a web server. For example, the GUI-based application 274 may include such programs as HyperText Markup Language (HTML), Extensible Markup Language (XML), Extensible HyperText Markup Language (XHTML), Flash, Windows Presentation Foundation (WPF) etc. In some other example embodiments, the GUI-based application 274 may include or be part of a non-browser application which may communicate with the server 142, for example to implement dedicated applications or "apps".

Although Figure 4 shows the GUI-based application 274 located on the mobile device 201, in other embodiments, some or all of the GUI-based application may be located externally to the mobile device 201.

The voice command application 272 sends a registration request 505 to the platform API 273, to enable the voice command application 272 to receive events and information from the GUI-based application 274. The platform API 273 performs the registration, and sends the registration response 510 to the voice command application 272 confirming the registration. Upon instantiation, the GUI-based application 274 registers itself with the platform API 273. Accordingly, the GUI-based application 274 sends a registration request 515 to the platform API 273 upon instantiation, and the platform API 273 sends registration response 520 to the GUI-based application 274 confirming the registration. After registering, the GUI-based application 274 exposes its pertinent information to the platform API 273 with pertinent information message 522. When an event occurs with respect to the GUI-based application 274, an event message 525 is sent to the platform API 273, which further transmits the event message 530 to the voice command application 272, since the voice command application 272 is registered with the platform API 273 as a "listener". Contained within event message 530 is the event information, and other salient application information regarding the GUI-based application 274 running on the mobile device 201.

Next, the voice command application 272 receives a voice input 535 via the speaker 256 of the mobile device 201. In response to receiving the voice input 535, the voice command application 272 extracts from the voice input one or more elements, and associates the one or more elements with the one or more input objects of the GUI-based application 274. At this point, the voice command application 272 may, in some embodiments, determine that it requires additional information from the platform API 273 about each user interface object or control visually displayed on the display screen 204. Accordingly, the voice command application 272 sends an information request 540 to the platform API 273. The platform API 273 then requests this information 545 from the GUI-based application 274. The platform API 273 receives an information response 550 from the GUI-based application 274, and further transmits information response 555 to the voice command application 272.

Using the initial information received via the event message 530 and/or the additional information response 555 regarding the GUI-based application 274, the voice command application 272 may identify whether one or more input objects has a required property which is not satisfied by the one or more elements of the voice input. If an input object is identified, the voice command application 272 then outputs through the speaker 256 of the mobile device 201, an audio prompt 560 for a further voice input to satisfy the required property of the identified input object.

Once the voice command application 272 receives the further voice input 565, and determines that it satisfies the identified input object, the voice command application 272 sends task completion instructions 570 to the platform API 273 to complete the task of the GUI-based application 274. The platform API 273 sends the task completion instructions 575 to the GUI-based application 274, which will execute the instructions 580. In one embodiment, this may include completing the input objects of the GUI-based application 274 running on the mobile device 201 according to input values corresponding to at least the further voice input 565, for example completing a restaurant reservation. In another embodiment, where the GUI-based application 274 is displayed on the display screen 204 of the mobile device 201, completing may include populating the visible input objects according to input values corresponding to at least the further voice input 565. The GUI-based application 274 and the server 142 may, in some example embodiments, communicate at step 590 to perform the respective functions. For example, the particular GUI-based application 274 may be a browser-based application, or a non-browser application or "app".

It may be appreciated that, in example embodiments, a user may be provided with a voice-free and eyes-free interface for a GUI-based application 274 which may not otherwise be voice enabled or eyes-free enabled. For example, example embodiments may be applied for use or installation within a vehicle, for use by a driver of a vehicle, for use by a user who is visually impaired, etc. As well, it may be appreciated that the method of the present disclosure does not require the GUI-based application 274 executing on the mobile device 201 to be displayed on the display screen 204. For example, in some example embodiments, the device 201 is configured to disable the display screen 203, which conserves power to the mobile device 201.

While some example embodiments have been described as being performed by the mobile device 201, it would be appreciated that some steps may be performed a server device (not shown); for example, for resource intensive off-site processing. In some example embodiments, referring to Figure 3, the off-site server device may perform at least one or all of steps 305, 315, 320, 325, based on communication of data from with the mobile device. The off-site server device may contain a library of aggregate information which can be better equipped to disambiguate received voice inputs.

While some of the present embodiments are described in terms of methods, a person of ordinary skill in the art will understand that present embodiments are also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a prerecorded storage device or other similar non-transitory computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present example embodiments.

The term "computer readable medium" as used herein includes any medium which can store instructions, program steps, or the like, for use by or execution by a computer or other computing device including, but not limited to: magnetic media, such as a diskette, a disk drive, a magnetic drum, a magnetooptical disk, a magnetic tape, a magnetic core memory, or the like; electronic storage, such as a random access memory (RAM) of any type including static RAM, dynamic RAM, synchronous dynamic RAM (SDRAM), a read-only memory (ROM), a programmable-read-only memory of any type including PROM, EPROM, EEPROM, FLASH, EAROM, a so-called "solid state disk", other electronic storage of any type including a charge-coupled device (CCD), or magnetic bubble memory, a portable electronic data-carrying card of any type including COMPACT FLASH, SECURE DIGITAL (SD-CARD), MEMORY STICK, and the like; and optical media such as a Compact Disc (CD), Digital Versatile Disc (DVD) or BLU-RAY Disc.

Variations may be made to some example embodiments, which may include combinations and sub-combinations of any of the above. The various embodiments presented above are merely examples and are in no way meant to limit the scope of this disclosure. Variations of the innovations described herein will be apparent to persons of ordinary skill in the art having the benefit of the example embodiments, such variations being within the intended scope of the present disclosure. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present disclosure as a whole. The subject matter described herein intends to cover and embrace all suitable changes in technology.

## Claims

1. A method of enabling voice input for a graphical user interface (GUI)-based application (274) on an electronic device (201), the method comprising:
obtaining required properties of one or more user interface objects of the GUI-based application (274), wherein the one or more user interface objects include one or more input objects;
receiving a voice input;
extracting from the voice input one or more elements;
associating the one or more elements with the one or more input objects;
identifying, based on said associating, an input object having a required property which is not satisfied; and
outputting, based on the required property, audio output for a prompt for a further voice input.

2. The method as claimed in claim 1, further comprising:
receiving the further voice input; and
associating the further voice input with the identified input object.

3. The method as claimed in claim 1, wherein said associating comprises:
generating, based on said one or more elements, an event receivable by the GUI-based application (274).

4. The method as claimed in any one of claims 1-3, wherein the one or more input objects are displayed on a display screen of the device, and said associating comprises updating the one or more input objects based on the one or more elements.

5. The method as claimed in claim 4, wherein the one or more input objects include an input field configured for receiving a text-based input, and wherein said updating comprises populating the input field with text based on the one or more elements.

6. The method as claimed in claim 4, wherein the one or more input objects include an input object configured for receiving a pointer input, and wherein said updating comprises one of: moving a slider on a slider scale; changing the state of a checkbox; changing the state of a radio button; and selecting an item from a drop-down list.

7. The method as claimed in any one of claims 1-6, wherein the required properties include at least one of: role information; state information; context information; and contextual relationship information regarding the one or more user interface objects.

8. The method as claimed in any one of claims 1-7, further comprising:
registering with an application programming interface (API) (273).

9. The method as claimed in claim 8, wherein said obtaining required properties comprises requesting from the API information regarding the GUI-based application (274).

10. The method as claimed in claim 8, wherein said obtaining required properties comprises receiving the required properties via the API (273).

11. The method as claimed in claim 8, wherein said obtaining required properties comprises receiving one or more events from the GUI-based application (274) via the API (273).

12. The method as claimed in claim 8, wherein said associating comprises providing, based on said one or more elements, information to the API (273).

13. An electronic device (201) comprising:
a processor (240);
a memory (244) coupled to the processor (240);
an audio input interface; and
an audio output interface;
wherein the memory (244) includes instructions, which when executed by the processor (240), cause the processor (240) to perform the method of any one of claims 1-12.

14. A non-transitory computer readable medium having instructions stored thereon for enabling voice input for a graphical user interface (GUI)-based application (274) on an electronic device (201), that when executed by a processor (240) causes the electronic device (201) to perform the method of any one of claims 1-12.
